# EUROPÄISCHE PATENTSCHRIFT

(11) **EP 4 037 161 B1**
(45) Veröffentlichungstag und Bekanntmachung des Hinweises auf die Patenterteilung: **24.07.2024**
(21) Anmeldenummer: 21154845.8
(22) Anmeldetag: 02.02.2021
(51) Int. Cl.: H02K 7/14, H02K 9/06, H02K 9/12, A01D 34/90, B25F 5/00

(54) **HANDGEFÜHRTES SCHAFTARBEITSGERÄT**
HAND-HELD SHAFT WORK APPARATUS
APPAREIL DE TRAVAIL À TIGE PORTABLE

(43) Veröffentlichungstag der Anmeldung: 03.08.2022
(73) Patentinhaber: Andreas Stihl AG & Co. KG, 71336 Waiblingen (DE)
(72) Erfinder: Neumaier, Thomas, 71336 Waiblingen (DE); Hoche, Florian, 74354 Besigheim (DE)
(74) Vertreter: Zurhorst, Stefan

(56) Entgegenhaltungen:
- EP-A1- 1 637 288
- EP-A1- 2 653 024
- EP-A2- 2 759 189
- EP-B1- 1 637 288
- EP-B1- 2 653 024
- EP-B1- 2 759 189
- WO-A1-2016/062134
- CN-A- 104 429 306
- DE-A1- 102007 053 308
- DE-A1- 102018 112 912
- US-A1- 2011 148 227

## Beschreibung

Die Erfindung betrifft ein handgeführtes Schaftarbeitsgerät mit einem Führungsrohr entsprechend den Merkmalen nach dem Oberbegriff des Anspruchs 1.

Handgeführte Schaftarbeitsgeräte mit einem Führungsrohr, mit einem an einem Abtriebsende des Führungsrohres angebrachten Abtriebskopf und mit einem elektrischen Antriebsmotor kennt man als Freischneider, als Rasentrimmer, als Hochentaster, als Heckenschneider oder dergleichen. Das Führungsrohr erlaubt eine große Reichweite, wodurch dem Benutzer die auszuführenden Arbeiten erleichtert werden.

Die durch das Führungsrohr bedingte langgestreckte Bauform bringt auf konstruktiver Seite eine Reihe von Anforderungen mit sich, die nicht leicht zu erfüllen sind. Die vom Antriebsmotor bereitgestellte Antriebsleistung muss zuverlässig zum Werkzeug übertragen werden. Trotz der langgestreckten Bauform dürfen dabei jedoch keine übermäßigen Schwingungen entstehen. Für die Handhabbarkeit sind ein geringes Gesamtgewicht und eine balancierte Massenverteilung wichtig. Dazu ist es angestrebt, den elektrischen Antriebsmotor relativ zur geforderten Leistung so klein wie möglich zu halten. Bei gegebener Leistung bringt jedoch eine Verkleinerung des Elektromotors im Regelfall auch eine Erhöhung der Temperaturbelastung mit sich, so dass im Rahmen der Gesamtabstimmung auch für eine ausreichende Kühlung gesorgt werden muss.

Aus der US 7,886,509 B2 ist ein gattungsgemäßes Schaftarbeitsgerät am Beispiel eines Freischneiders bekannt, dessen Führungsrohr am Abtriebsende einen Abtriebskopf in Form eines Getriebekopfes mit einem kreisscheibenförmigen Messer aufweist. Am gegenüberliegenden Ende befindet sich als Energiequelle ein Akku, der in einem entsprechenden Gehäuse gehalten ist. Der elektrische Antriebsmotor ist im Mittenbereich des Führungsrohres platziert. Hierfür ist das Führungsrohr zweiteilig ausgeführt: Ein werkzeugseitiger Abschnitt und ein akkuseitiger Abschnitt des Führungsrohres treffen an einem etwa mittigen Motorgehäuse zusammen, wobei der elektrische Antriebsmotor in diesem Motorgehäuse gehalten ist. Von dort erfolgt ein Drehantrieb des Getriebekopfes bzw. seines Messers über eine durch den werkzeugseitigen Abschnitt des Führungsrohres geführte Torsionswelle.

Die Positionierung des Elektromotors im Mittenbereich des Führungsrohres abseits des Akkugehäuses kann dazu beitragen, die Massenbalance des Gerätes zu verbessern. Die geteilte Bauweise des Führungsrohres ist jedoch aufwändig. Außerdem sind die Positioniermöglichkeiten des Motors in der Längsrichtung des Führungsrohres aufgrund des Bauraumbedarfs des Motorgehäuses eingeschränkt, da ansonsten Kollisionen mit der Griffrohrbefestigung sowie mit einer ebenfalls am Griffrohr angebrachten Steuereinheit auftreten können. Insbesondere gibt die gezeigte Bauform keinen Ansatz für eine verbesserte Kühlluftführung als Grundlage für eine Massen- und Bauraumverringerung.

Die EP 1 637 288 A1 offenbart einen Meißelhammer, dessen Kühlluftstrom durch Gehäusefenster angesaugt, durch den Antriebsmotor hindurchgeführt und durch Auslassöffnungen eines rohrförmigen Gehäuseabschnittes ausgeblasen wird. Aus der CN 104429306 A ist ein Rasentrimmer mit einem Führungsrohr bekannt, an dessen einen Ende sich ein Griffteil befindet, und an dessen anderen Ende ein Abtriebskopf mit einem integrierten Antriebsmotor angeordnet ist. Ein erster Teilluftstrom zur Motorkühlung wird durch Fenster des Abtriebskopfes angesaugt. Ein weiterer Teilluftstrom tritt durch Fenster des Griffteiles ein und wird durch das Führungsrohr hindurch zum Antriebsmotor geführt. Die DE 10 2018 112 912 A1 beschreibt noch eine durch einen Rollenmotor angetriebene Förderrolle. Der Rollenmotor wird innen in Achsrichtung durchströmt und unter Bildung eines geschlossenen Kreislaufes koaxial im Gegenstrom zwischen Motoraußenseite und Rollenwand umströmt. Im Bereich des Rollenmotors wirkt die äußere Rollenwand als Wärmetauscher zur Wärmeabfuhr an die Umgebung.

EP 2 653 024 A1 beschreibt ein Arbeitsgerät mit einem Führungsrohr, wobei der Antriebsmotor des Arbeitsgeräts durch einen Luftstrom gekühlt wird.

Der Erfindung liegt die Aufgabe zugrunde, ein gattungsgemäßes Schaftarbeitsgerät derart weiterzubilden, dass eine flexibel anpassbare Massenbalance bei verbesserter Kühlluftführung erreicht wird.

Diese Aufgabe wird durch ein Schaftarbeitsgerät mit den Merkmalen des Anspruchs 1 gelöst.

Nach der Erfindung ist ein handgeführtes Schaftarbeitsgerät vorgesehen, bei dem der elektrische Antriebsmotor durch einen Kühlluftstrom gekühlt ist, und wobei zur Führung des Kühlluftstromes im Führungsrohr ein Zuluftkanal für einen Frischluftstrom zum elektrischen Antriebsmotor hin und ein Abluftkanal für einen Abluftstrom vom elektrischen Antriebsmotor fort verlaufen. Die Führung sowohl des Frischluftstromes als auch des Abluftstromes im Führungsrohr bringt eine Reihe von Vorteilen mit sich: Der elektrische Antriebsmotor kann zur Erzeugung einer gewünschten Gerätebalance nahezu beliebig positioniert werden, ohne irgendwelchen Einschränkungen seitens der Luftführung zu unterliegen. Die Frischluft muss nicht in Bodennähe oder in Nähe des Arbeitsortes mit hoher Staub- und Schmutzbelastung angesaugt werden. Und auch die Abluft kann unabhängig von der gewählten Motorpositionierung zu einer beliebigen als geeignet identifizierten Stelle geführt werden. Die exakte Luftführung ermöglicht es, den Antriebsmotor relativ zur geforderten Leistung klein und leicht zu halten, ohne dass thermische Grenzen überschritten werden. Zudem entstehen neue Freiheiten in der Produktgestaltung in Hinblick auf das Produktdesign.

Gemäß der Erfindung verlaufen der Zuluftkanal und der Abluftkanal im Führungsrohr auf der dem Abtriebskopf abgewandten Seite des Antriebsmotors. Hierdurch kann der Antriebsmotor sehr nahe am Abtriebskopf positioniert werden, ohne dass zwischen Motor und Abtriebskopf Platz für die Luftführung im Führungsrohr belassen werden muss. Der Kraftübertragungsweg vom Antriebsmotor zum Werkzeug ist kurz, so dass der Antriebsstrang frei von Schwingungsbildung gehalten wird. Zudem wird die Luftführung weder innenseitig vom Antriebsstrang noch außenseitig von der Staub- und Schmutzbelastung des unmittelbaren Arbeitsbereiches beeinträchtigt.

Der elektrische Antriebsmotor weist einen radial inneren Rotor und einen radial äußeren Stator auf, wobei zwischen dem Rotor und dem Stator ein Ringspalt ausgebildet ist. Der Zuluftkanal mündet derart in den Ringspalt, dass der Kühlluftstrom durch den Ringspalt geleitet wird, und dass der aus dem Ringspalt austretende Kühlluftstrom entlang einer äußeren Umfangsfläche des Stators zurück in den Abluftkanal geführt wird. Dadurch erfährt der Motor sequentiell eine innere und auch äußere Kühlung im Gegenstrom, so dass selbst bei sehr kompakter Bauform des Motors und hoher Leistungsbelastung kritische Temperaturen zuverlässig vermieden werden.

In einer bevorzugten Ausführungsform ist der elektrische Antriebsmotor ein in das Führungsrohr eingesetzter und vom Führungsrohr umschlossener Rohrmotor. Der Motor ist hierdurch gegen äußere Einflüsse optimal geschützt. Es liegt ein geschlossener bzw. gekapselter Aufbau vor, wodurch beispielsweise ein verbesserter Wetter- bzw. Nässeschutz erzielt ist. Er kann entlang des Führungsrohres in dessen Längsrichtung nach Bedarf positioniert werden, um dem Arbeitsgerät eine bestmögliche Balance zu geben. Das Führungsrohr muss nicht getrennt oder in einzelne Stücke aufgeteilt werden, sondern kann vielmehr durchgehend verlaufen, was bei geringem Fertigungsaufwand auch eine hohe mechanische Belastbarkeit zur Folge hat. Die mechanische Fixierung des Antriebsmotors natürlich so zu gestalten, dass das Antriebsmoment und ggf. Trägheitsmomente sicher im Führungsrohr abgestützt werden. In der Ausführung als Rohrmotor ist eine derartige Fixierung im Führungsrohr einfach zu erzielen. Auch Luftführung und Wärmeabfuhr sind einfach, da hierfür das ohnehin vorhandene Führungsrohr mit einbezogen wird. Weitere Vorzüge ergeben sich insbesondere dann, wenn ein Teil oder die gesamte Länge des Führungsrohrs als Griffstelle für den Anwender vorgesehen ist. Dann bringt die vollständige Integration des E-Motors in den Schaft einen zusätzlichen Nutzen und mehr Gestaltungsspielraum, ohne die Anwenderschnittstelle negativ zu beeinflussen. Das ist beispielsweise bei Spezialerntern wie dem Olivenschüttler der Fall.

Es kann zweckmäßig sein, die Kühlluft an geeigneter Stelle ganz oder teilweise anzusaugen und als Abluft an gleicher oder anderer Stelle im entsprechenden Maß wieder auszublasen. In vorteilhafter Weiterbildung sind jedoch der Zuluftkanal und der Abluftkanal zusammen mit einem Wärmetauscherabschnitt des elektrischen Antriebsmotors zu einem zumindest teilweise und insbesondere vollständig geschlossenen Kühlluftkreislauf miteinander verbunden. Hierdurch wird der Motor optimal geschützt, da mit dem Kühlluftstrom keine Fremdkörper wie Schmutz und Staub angesaugt und eingetragen werden. Ein fehlender bzw. reduzierter zur Umgebung hin offener Abluftstrom verhindert ungewolltes Anblasen des Anwenders. Es gibt keine oder allenfalls reduzierte Öffnungen für Ansaugen und Ausblasen, so dass die Gefahr einer Kühlluftblockade durch versehentliches Abdecken solcher Öffnungen reduziert ist.

Für die Wärmeabfuhr aus dem ganz oder teilweise geschlossenen Kühlkreislauf kann ein separater Wärmetauscher zum Einsatz kommen. In einer bevorzugten Ausführungsform weist jedoch der Kühlkreislauf und insbesondere dessen Abluftkanal einen Kühlwandabschnitt auf, wobei der Kühlwandabschnitt durch das Führungsrohr bzw. einen Teil davon gebildet ist. Vorteilhaft besteht dazu das Führungsrohr zumindest im Bereich des Kühlwandabschnittes aus einem Material mit hoher Wärmeleitfähigkeit, bevorzugt aus Metall und insbesondere aus Aluminium. Unter Verzicht auf einen separaten Wärmetauscher wird dabei das ohnehin vorhandene Führungsrohr in Mehrfachfunktion auch als Wärmetauscher eingesetzt. Dabei wird der Umstand genutzt, dass das Führungsrohr immanent eine große und geschlossene Oberfläche aufweist, die für die Abfuhr der entsprechenden Wärmemenge an die Umgebung ausreicht.

Für die Luftführung innerhalb des Führungsrohres kommen im Rahmen der Erfindung verschiedene Möglichkeiten in Betracht. Bevorzugt sind der Zuluftkanal und der Abluftkanal konzentrisch zueinander angeordnet und durch ein Einsatzelement im Führungsrohr voneinander getrennt. Bei der hierdurch gebildeten koaxialen Bauform erfolgt die Frischluftzufuhr zum Motor im radial inneren Zuluftkanal, während die mit Wärme beladene Abluft im Abluftkanal, welcher den inneren Zuluftkanal umschließt, vom Motor fortgeleitet wird. Dabei ist der Abluftkanal radial außen von der Wand des Führungsrohrs begrenzt. Diese Wand umschließt den Abluftkanal in Umfangsrichtung vollständig. Mit anderen Worten steht das Führungsrohr entlang der Länge des Abluftkanals mit seinem kompletten Umfang als Kühlwandabschnitt und damit als Wärmetauscher zur Verfügung, so dass eine entsprechende Kühlleistung erzielt werden kann. Alternative Querschnittsaufteilungen für die Zu- und Abluft können je nach geforderter Kühleffizienz ebenfalls realisiert werden.

In einer vorteilhaften Ausführungsform ist der elektrische Antriebsmotor im Bereich einer dem Abtriebsende zugewandten Hälfte des Führungsrohres angeordnet. Hierdurch kann die Antriebswelle kurz gehalten werden, was Torsionsschwingungen reduziert. In einer weiteren bevorzugten Ausführungsform ist der elektrische Antriebsmotor in einem Abstand zum Abtriebsende des Führungsrohres angeordnet. In der Folge überträgt sich die Abwärme des Abtriebskopfes nicht oder nicht wesentlich auf den Antriebsmotor.

Ein Ausführungsbeispiel der Erfindung ist nachfolgend anhand der Zeichnung näher beschrieben. Es zeigen:
- Fig. 1: in einer perspektivischen Ansicht ein erfindungsgemäß ausgeführtes Schaftarbeitsgerät am Beispiel eines Freischneiders, dessen Führungsrohr einen Kühlwandabschnitt eines Kühlluftkreislaufes für den elektrischen Antriebsmotor bildet,
- Fig. 2: in einer vergrößerten, teilweise geschnittenen Seitenansicht den Freischneider nach Fig. 1 im Bereich seines Abtriebskopfes mit Einzelheiten zur Positionierung des Antriebsmotors im Führungsrohr und mit Einzelheiten zur Führung des Kühlluftstromes in einem geschlossenen Kreislauf,
- Fig. 3: eine vergrößerte Detaildarstellung der Anordnung nach Fig. 2 mit Einzelheiten der Kühlluftführung und -Umlenkung im Bereich des elektrischen Antriebsmotors, und
- Fig. 4: in einer Schnittdarstellung gemäß der in Fig. 3 vermerkten Schnittlinie IV - IV einen Querschnitt durch das Führungsrohr mit Einzelheiten zur Positionierung und Zentrierung des Antriebsmotors und eines Einsatzelementes zur Trennung von Zu- und Abluftstrom.

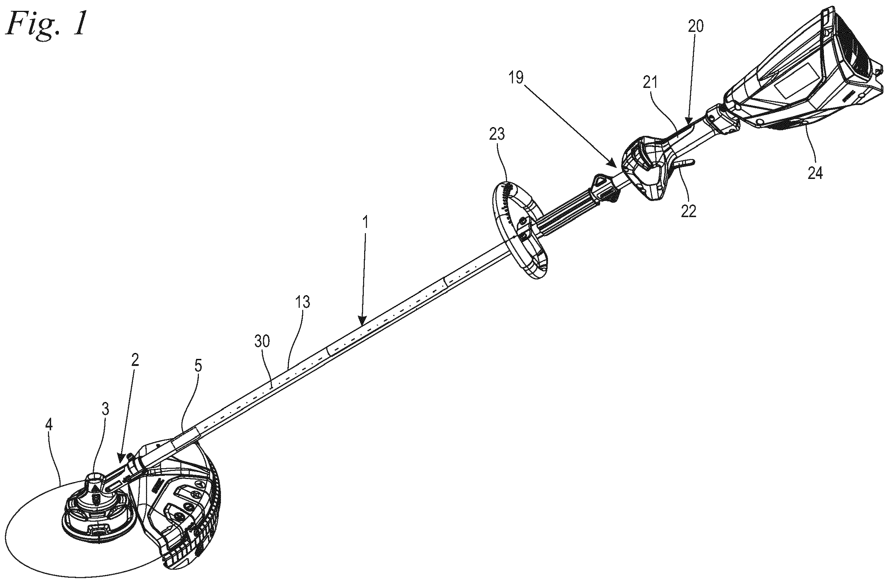

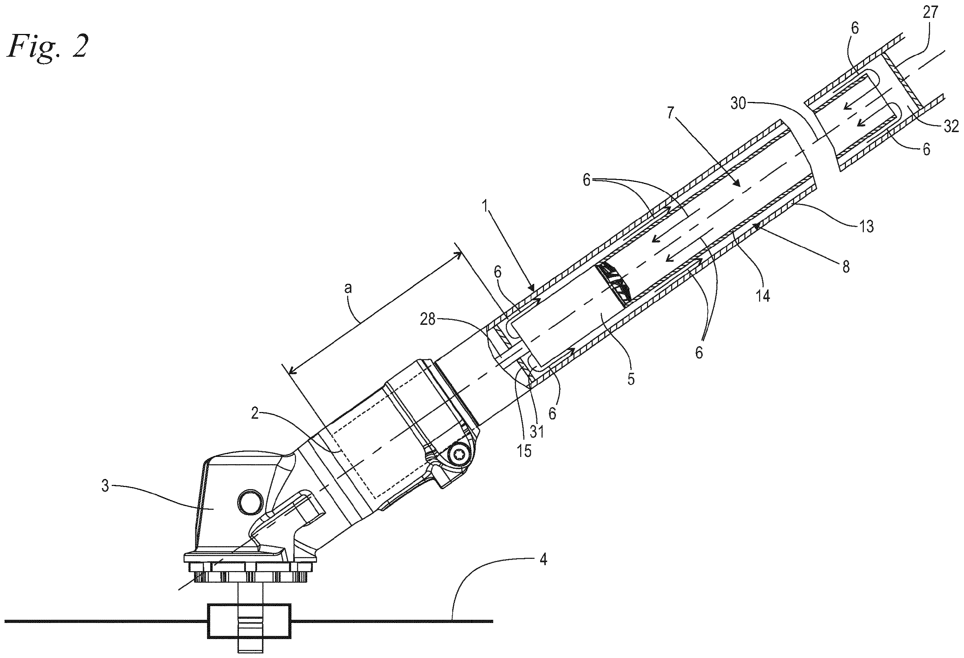

Fig. 1 zeigt in einer perspektivischen Ansicht ein erfindungsgemäß ausgeführtes Schaftarbeitsgerät mit einem hier nur schematisch angedeuteten, jedoch in den Fig. 2 bis 4 näher dargestellten elektrischen Antriebsmotor 5 und mit einem sich entlang einer Längsachse 30 erstreckenden Führungsrohr 1. Das Schaftarbeitsgerät ist beispielhaft ein Freischneider. Es kann aber auch eine andere Bauform eines Schaftarbeitsgerätes wie beispielsweise ein Rasentrimmer, ein Hochentaster, ein Heckenschneider oder dergleichen jeweils mit einem solchen Führungsrohr 1 vorgesehen sein.

Das Führungsrohr 1 weist ein benutzerseitiges Ende 19 auf. Im Bereich des benutzerseitigen Endes sind insbesondere eine Griffeinheit 20 sowie eine Akkueinheit 24 am Führungsrohr befestigt. Optional können auch noch weitere Griffstellen - wie beispielsweise ein hier dargestellter Griffbügel 23 - vorgesehen sein. Die Griffeinheit 20 ist mit einem Handgriff 21 und mit einem Betriebsschalter 22 für den Antriebsmotor 5 versehen. Die Akkueinheit 24 nimmt zumindest einen auswechselbaren Akku für die elektrische Stromversorgung des Schaftarbeitsgerätes bzw. des Antriebsmotors 5 auf. Alternativ kann aber auch ein am Gürtel oder am Rücken des Benutzers getragener Akku zum Einsatz kommen, welcher über ein Kabel mit dem Schaftarbeitsgerät verbunden wird. Eine weitere Möglichkeit besteht im Rahmen der Erfindung in einer Netzspannungsversorgung.

An seinem dem benutzerseitigen Ende 19 gegenüberliegenden Abtriebsende 2 trägt das Führungsrohr 1 einen Abtriebskopf 3. Der Abtriebskopf 3 kann ein Winkelgetriebe, ein Anschlussgetriebe für einen Heckenscherenaufsatz oder für einen Sägekettenaufsatz sein. Im gezeigten Ausführungsbeispiel ist er ein Freischneider-Werkzeugkopf, an dessen hier nicht dargestellter Ausgangswelle ein nur schematisch mittels seines Flugkreises angedeutetes Werkzeug 4 befestigt und mittels des eingangs schon erwähnten, in den Fig. 2 bis 4 dargestellten Antriebsmotors 5 drehend antreibbar ist. Darüber hinaus ist es möglich, den Abtriebskopf 3 mit einem Direktantrieb des Werkzeugs 4 ohne eine Getriebestufe zu realisieren.

Für die Positionierung des Antriebsmotors 5 entlang der Erstreckung des Führungsrohres 1 kommen im Rahmen der Erfindung verschiedene Möglichkeiten in Betracht. Im gezeigten bevorzugten Ausführungsbeispiel ist der elektrische Antriebsmotor 5 im Bereich einer dem Abtriebsende 2 zugewandten Hälfte des Führungsrohres 1 angeordnet, wodurch der Übertragungsweg der Antriebsleistung vom Antriebsmotor 5 zum Werkzeug 4 kurz gehalten und insbesondere das Auftreten von Drehschwingungen im Antriebsstrang vermieden ist.

Das Führungsrohr 1 bildet im Übrigen einen Kühlwandabschnitt 13 einer Kühlluftführung für den Antriebsmotor 5. Bezogen auf die Axialrichtung des Führungsrohres 1 kann auf beiden Seiten des Antriebsmotors 5 ein Kühlwandabschnitt 13 ausgebildet sein. Im gezeigten bevorzugten Ausführungsbeispiel nur auf der dem Abtriebsende 2 gegenüberliegenden Seite des Antriebsmotors 5 ein Kühlwandabschnitt 13 durch das Führungsrohr 1 ausgebildet, wie nachfolgend näher beschrieben wird.

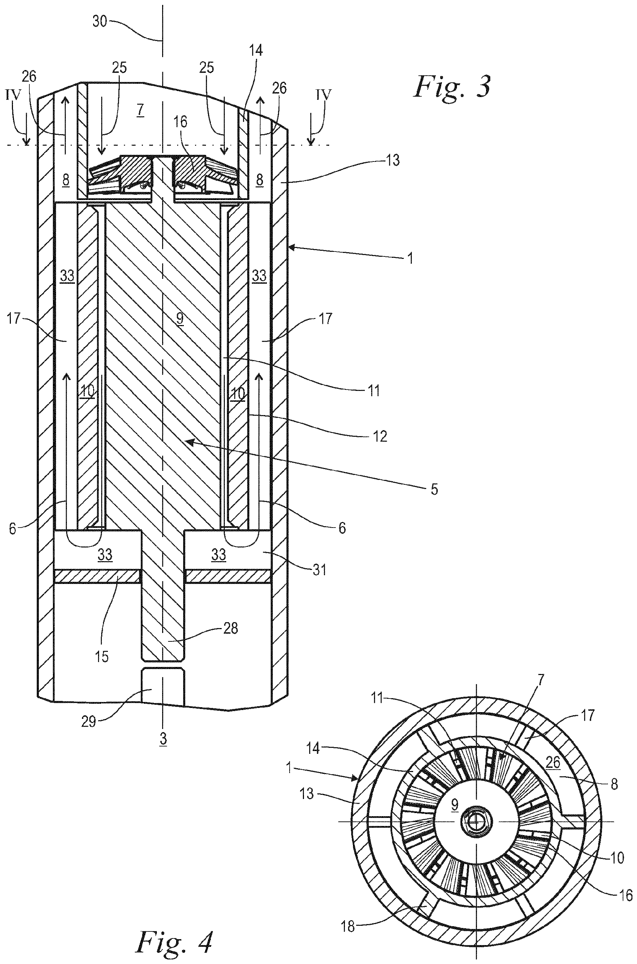

Fig. 2 zeigt in einer vergrößerten, teilweise geschnittenen Seitenansicht das handgeführte Schaftarbeitsgerät nach Fig. 1. Das Schaftarbeitsgerät weist den vorstehend schon erwähnten, hier besser dargestellten elektrischen Antriebsmotor 5 mit einer Motorwelle 28 auf, wobei die Motorwelle 28 drehmomentübertragend mit einer in Fig. 3 dargestellten Anschlusswelle 29 des Abtriebskopfes 3 verbunden ist und darüber das Werkzeug 4 antreibt.

Der Antriebsmotor 5 kann separat vom Führungsrohr 1 ein eigenes Gehäuse aufweisen. Im gezeigten bevorzugten Ausführungsbeispiel ist er jedoch als sogenannter Rohrmotor ausgeführt und als solcher koaxial zur Längsachse 30 in das Führungsrohr 1 eingesetzt und dort fixiert. In seiner Bauart als Rohrmotor ist der Antriebsmotor 5 umfangsseitig von der Wand des Führungsrohrs 1 umschlossen. Im Rahmen der Erfindung kann der Antriebsmotor 5 in allen in Betracht kommenden Ausführungsformen, und insbesondere in der gezeigten bevorzugten Ausführung als Rohrmotor bezogen auf die Längsrichtung beliebig im Führungsrohr positioniert werden, wobei er jedoch im gezeigten bevorzugten Ausführungsbeispiel im Bereich des Abtriebsendes 2 und damit nahe dem Abtriebskopf 3 angeordnet ist. Allerdings befindet sich der Antriebsmotor 5 nicht unmittelbar am Abtriebsende 2 des Führungsrohres 1 und damit nicht in unmittelbarer Nähe zum Abtriebskopf 3. Vielmehr ist der elektrische Antriebsmotor 5 derart angeordnet bzw. positioniert, ein Abstand a zwischen ihm und dem Abtriebsende 2 des Führungsrohres 1 verbleibt, um einen potentiellen Wärmeeintrag vom Abtriebskopf 3 in den Bereich des Antriebsmotors 5 zu minimieren.

Der Antriebsmotor 5 wird im Betrieb durch einen Kühlluftstrom 6 gekühlt, welcher die im Antriebsmotor 5 freigesetzte Verlustwärme aufnimmt und abtransportiert. Zur Führung des Kühlluftstromes 6 sind ein Zuluftkanal 7 und ein Abluftkanal 8 vorgesehen. Der Zuluftkanal 7 und der Abluftkanal 8 verlaufen beide zumindest teilweise, hier vollständig innerhalb des Führungsrohres 1, wobei der Zuluftkanal 7 den Kühlluftstrom 6 zum Antriebsmotor 5 hinführt, während der Abluftkanal 8 vom Antriebsmotor 5 fortführt. Vorteilhaft verlaufen der Zuluftkanal 7 und der Abluftkanal 8 beide bezogen auf die durch die Längsachse 30 vorgegebene Axialrichtung auf der dem Abtriebskopf 3 abgewandten Seite des Antriebsmotors 5. Der Zuluftkanal 7 und der Abluftkanal 8 verlaufen demnach in dem Abschnitt des Führungsrohres, der keine Motorwelle 28 oder Anschlusswelle 29 umgibt.

Um eine möglichst große Kühloberfläche bereitzustellen, ist die Länge des Kühlwandabschnitts 13 (Fig. 1, 2 ) zu maximieren. Dementsprechend ist bei einer derartigen Gestaltung der Antriebsmotor 5 möglichst nahe zum Abtriebsende 2 des Führungsrohres anzuordnen. Um eine Erwärmung des Antriebsmotors 5 durch Abwärme des Abtriebskopfes 3 zu vermeiden, ist aber ein Abstand a zwischen Abtriebsende 2 und Antriebsmotor 5 vorteilhaft. Im gezeigten bevorzugten Ausführungsbeispiel ist deshalb ein Kompromiss zwischen beiden Einflussgrößen gewählt, wonach der Antriebsmotor 5 zwar in der dem Abtriebsende 2 zugewandten Hälfte des Führungsrohres 1 angeordnet ist, wonach aber dennoch der erwähnte Abstand a beibehalten wurde.

Es kann zweckmäßig sein, insbesondere an den vom Antriebsmotor 5 entfernten Enden des Zuluftkanals 7 und des Abluftkanals 8 ein Fenster anzubringen, wodurch der Kühlluftstrom 6 ganz oder anteilig angesaugt bzw. ausgeblasen wird. Im gezeigten bevorzugten Ausführungsbeispiel sind der Zuluftkanal 7 und der Abluftkanal 8 zusammen mit dem elektrischen Antriebsmotor 5 zu einem vollständig geschlossenen Kühlluftkreislauf miteinander verbunden. Hierzu befindet sich im Führungsrohr 1 auf der dem Abtriebskopf 3 zugewandten Seite des Antriebsmotors 5 eine erste Schottwand 15 zur Umlenkung des Kühlluftstroms 6, während im Führungsrohr 1 auf der dem Abtriebskopf 3 abgewandten Seite des Antriebsmotors 5 eine zweite Schottwand 27 ebenfalls zur Umlenkung des Kühlluftstroms 6 angeordnet ist. Damit verläuft der Kühlluftstrom 6 in nachstehend näher beschriebener Weise in einem geschlossenen Kühlkreislauf zwischen den beiden Schottwänden 15, 27.

Dabei ist ein zugehöriger Kühlwandabschnitt 13 durch das Führungsrohr 1 gebildet, welcher als Wärmetauscher für die Abfuhr der Verlustwärme aus dem Kühlluftstrom 6 wirkt. Das Führungsrohr 1 besteht hierfür zumindest im Bereich des Kühlwandabschnittes 13, vorliegend sogar insgesamt aus einem Material mit hoher Wärmeleitfähigkeit. Ein solches Material ist bevorzugt Metall, wobei im Ausführungsbeispiel Aluminium gewählt ist. Anders als bei der gezeigten bevorzugten Ausführungsform muss der Kühlkreislauf aber nicht vollständig geschlossen sein. Es kann auch eine anteilige Einspeisung von Frischluft bzw. Ausblasung von Abluft in Verbindung mit einer Kreislaufführung zweckmäßig sein.

Fig. 3 zeigt in einer vergrößerten Längsschnittdarstellung die Anordnung nach Fig. 2 im unmittelbaren Bereich des Antriebsmotors 5. Eine zugehörige Querschnittdarstellung entlang der Schnittlinie IV - IV gemäß Fig. 3 ist in Fig. 4 gezeigt. Aus der Zusammenschau der beiden Figuren 3, 4 ergeben sich weitere Einzelheiten zur Positionierung und Zentrierung des Antriebsmotors 5 sowie zur Führung des Kühlluftstroms 6.

Zunächst sei auf konstruktive Einzelheiten des elektrischen Antriebsmotors 5 eingegangen: Der Antriebsmotor 5 ist insoweit in üblicher Bauform gehalten, dass er einen radial inneren Rotor 9 und einen radial außen den Rotor 9 umschließenden Stator 10 umfasst. Der Stator 10 ist auf seiner Außenseite mit mehreren, hier beispielhaft drei Zentriervorsprüngen 17 versehen, welche über den Umfang verteilt angeordnet sind, und welche sich außerdem in Form von Längsrippen parallel zur Längsachse 30 über einen Teil, hier über die gesamte Länge des Stators 10 erstrecken. Die Zentriervorsprünge 17 reichen von innen bis an die Umfangswand des Führungsrohrs 1 heran und sind dort gegen diese abgestützt. Dadurch ist der Antriebsmotor 5 im Führungsrohr 1 fixiert und radial relativ zur Längsachse 30 zentriert. Der Stator 10 ist dabei räumlich feststehend, gerätefest montiert. Demgegenüber ist der Rotor 9 um die Längsachse 30 drehbar gelagert, wird im Betrieb über nicht gezeigte strombeaufschlagte Spulen und Magnete relativ zum feststehenden Stator 10 in Drehung versetzt, und treibt über die Motorwelle 28 mittels einer nicht dargestellten Kupplung die Anschlusswelle 29 an.

Auf der in axialer Richtung dem Abtriebsende 2 gegenüberliegenden Seite des Antriebsmotors 5 ist im Führungsrohr 1 ein rohrförmiges Einsatzelement 14 positioniert, welches unmittelbar an den Antriebsmotor 5 heranreicht und sich entlang der Längsachse 30 von dort bis in die unmittelbare Nähe der rückwärtigen, benutzerseitigen zweiten Schottwand 27 (Fig. 2) erstreckt. Analog zum Stator 10 ist auch das Einsatzelement 14 auf seiner Außenseite mit mehreren, hier beispielhaft drei Zentriervorsprüngen 18 versehen, welche gleichmäßig über den Umfang verteilt angeordnet sind, und welche sich außerdem in Form von Längsrippen parallel zur Längsachse 30 über einen Teil, hier über die gesamte Länge des Einsatzelementes 14 erstrecken. Die Zentriervorsprünge 18 reichen von innen bis an die Umfangswand des Führungsrohrs 1 heran und sind dort gegen sie abgestützt. Auf diese Weise ist auch das Einsatzelement 14 im Führungsrohr 1 fixiert und dabei in radialer Richtung relativ zur Längsachse 30 zentriert.

Das rohrförmige Einsatzelement 14 teilt auf der dem Abtriebskopf 3 axial gegenüberliegenden Seite des Antriebsmotors 5 den Innenraum des Führungsrohres in zwei koaxial zur Längsachse 30 sich erstreckende Teilräume auf: Ein erster Teilraum liegt radial innen und ist nach außen durch die Umfangswand des Einsatzelementes 14 begrenzt. Dieser erste, radial innere Teilraum bildet den Zuluftkanal 7. Ein zweiter Teilraum umschließt den ersten Teilraum, indem er radial innen durch die Umfangswand des Einsatzelementes 14 und radial außen durch die Umfangswand des Führungsrohrs 1 begrenzt ist. Dieser zweite, radial äußere Teilraum bildet den mittels des Einsatzelementes 14 vom Zuluftkanal 7 abgetrennten Abluftkanal 8. Der Zuluftkanal 7 und der Abluftkanal 8 liegen dabei konzentrisch zueinander und zur Längsachse 30. Dadurch, dass sich das Einsatzelement 14 in axialer Richtung vom Antriebsmotor 5 bis kurz vor die rückwärtige, benutzerseitige zweite Schottwand 27 (Fig. 2) erstreckt, erstrecken sich auch der Abluftkanal 8 und der Zuluftkanal 7 in entsprechender Weise: Der Abluftkanal 8 verläuft in axialer Richtung vom Antriebsmotor 8 bis zur zweiten Schottwand 27, und geht dort in den Zuluftkanal 7 über. Der Zuluftkanal 7 verläuft seinerseits in axialer Richtung von der zweiten Schottwand 27 bis zum Antriebsmotor 5. Alternative Formen zur Trennung der warmen Abluft von der kalten Zuluft können ebenfalls im Rahmen der Erfindung realisiert werden.

Zusätzlich zum Zuluftkanal 7 und zum Abluftkanal 8 gibt es noch für die Führung des Kühlluftstromes 6 einen Wärmetauscherabschnitt 33, welcher sich in unmittelbarer Nähe zum Antriebsmotor 5 befindet. Teil dieses Wärmetauscherabschnittes 33 ist ein Ringspalt 11 zwischen dem Rotor 9 und dem Stator 10, welcher eine freie Drehbewegung des Rotors 9 zulässt. Der Ringspalt 11 wird räumlich noch ergänzt durch Zwischenräume zwischen den nicht gezeigten Motormagneten und Spulen. Durch den Ringspalt und die genannten zusätzlichen Zwischenräume ist eine innere axiale Durchströmung des Antriebsmotors 5 mit dem Kühlluftstrom 6 möglich. Die Zentriervorsprünge 17 halten eine äußere Umfangsfläche 12 des Stators 10 auf Abstand zur Innenwand des Führungsrohrs 1, so dass zwischen beiden ein nur von den rippenförmigen Zentriervorsprüngen 17 unterbrochener Ringraum entsteht. Dieser Ringraum ist ebenso wie ein stirnseitig zwischen dem Antriebsmotor 5 und der ersten, vorderen Schottwand 15 befindlicher erster Umlenkraum 31 Teil des Wärmetauscherabschnittes 33, durch welchen der Kühlluftstrom 6 im Betrieb geführt wird.

Der Zuluftkanal 7, der Abluftkanal 8 und der Wärmetauscherabschnitt 33 sind zu dem schon erwähnten Kühlluftkreislauf strömungsleitend wie folgt miteinander verbunden. Zur Förderung des Kühlluftstromes 6 ist der Antriebsmotor 5 mit einem Lüfterrad 16 versehen, welches auf der dem Abtriebskopf 3 gegenüberliegenden Seite am Rotor 9 befestigt ist und sich gemeinsam mit diesem dreht. Das Lüfterrad 16 kann, je nach Anforderung an den Gesamtaufbau sowohl auf der Abtriebsseite als auch auf der in Axialrichtung gegenüberliegenden Seite des elektrischen Antriebsmotors 5 positioniert sein, wobei im gezeigten Ausführungsbeispiel die letztgenannte Möglichkeit, also die Positionierung auf der dem Abtriebskopf 3 gegenüberliegenden Seite gewählt ist. Das Lüfterrad 16 ist vorliegend als Axialgebläse ausgeführt, kann aber auch als Gebläserad für ein Radialgebläse ausgebildet sein.

Das Lüfterrad 16 ragt vom Rotor 9 aus in das Einsatzelement 14 bzw. in den durch das Einsatzelement 14 gebildeten inneren Zuluftkanal 7 hinein und ist derart ausgelegt, dass im Betrieb bei gewöhnlicher Drehrichtung der Kühlluftstrom 6 als kalter Zuluftstrom 25 aus dem Zuluftkanal 7 angesaugt und in Richtung zum Werkzeugkopf 3 hin durch den Ringspalt 11 hindurch geblasen wird. Nach dem Austritt aus dem Ringspalt 11 wird der Kühlluftstrom 6 im ersten Umlenkraum 31 zwischen der Stirnseite des Antriebsmotors 5 und der vorderen, ersten Schottwand 15 zunächst radial nach außen und dann insgesamt um 180° nach hinten umgelenkt, um dann vom Werkzeugkopf 3 fortführend durch den Ringraum zwischen dem Führungsrohr 1 und der äußeren Umfangsfläche 12 des Stators 10 nach hinten weitergeleitet zu werden. Die Motorwelle 28 durchgreift zwar die vordere, erste Schottwand 15. Beide sind jedoch ausreichend gegeneinander abgedichtet, dass keine oder keine übermäßigen Strömungsverluste bei der Umlenkung des Kühlluftstromes 6 an der Schottwand 15 entstehen.

Während des gesamten Durchlaufs durch den Wärmetauscherabschnitt 33, also im Ringspalt 11, im ersten Umlenkraum 31 und an der äußeren Umfangsfläche 12 nimmt der Kühlluftstrom 6 sequentiell vom Antriebsmotor 5 Verlustwärme auf, wodurch der Antriebsmotor 5 innerhalb seiner zulässigen Betriebstemperaturgrenzen bleibt. Die rippenförmigen Zentriervorsprünge 17 wirken dabei unterstützend als Kühlrippen und als Wärmeleitstruktur zur Wärmeübertragung an das umschließende Führungsrohr 1. Der innere Ringspalt 11 und der äußere Ringraum mit der äußeren Umfangsfläche 12 werden gegenläufig durchströmt, was im Vergleich zu einer gleichläufigen Durchströmung zu einer Vergleichmäßigung der Motortemperatur beiträgt. Das hier gewählte Prinzip der gegenläufigen Durchströmung ist im Rahmen der Erfindung ein eigenständiges Konzept welches abseits der hier dargestellten konkreten Bauform auch auf andere erfindungsgemäße Bauformen angewandt werden kann.

Der durch die aufgenommene Verlustwärme aufgeheizte Kühlluftstrom 6 tritt nach Überstreichen der Außenseite des Antriebsmotors 5 in den im Querschnitt ringförmigen Abluftkanal 8 ein und durchläuft diesen als Abluftstrom 26 bis zur zweiten, hinteren Schottwand 27 (Fig. 2). Hierbei streicht der Abluftstrom 26 entlang der Innenfläche des Führungsrohrs 1, dessen Wand hier als Kühlwandabschnitt 13 wirkt. Der Kühlwandabschnitt 13 entzieht dem Abluftstrom 26 überschüssige Wärmeenergie und leitet diese an die äußere Umgebung ab. Entlang der Lauflänge des Abluftkanals 8 wird auf diese Weise der im Wärmetauscherabschnitt 33 als Kühlluftstrom 6 aufgeheizte Abluftstrom 26 abgekühlt.

Das Einsatzelement 14 reicht in axialer Richtung nicht ganz bis an die zweite, hintere Schottwand 27 heran, so dass zwischen beiden ein zweiter, hinterer Umlenkraum 32 (Fig. 2) verbleibt. Nach dem rückwärtigen Austritt aus dem Abluftkanal 8 wird der herabgekühlte Abluftstrom 26 in diesem zweiten Umlenkraum 32 zunächst radial nach innen und dann insgesamt um 180° nach vorne umgelenkt, um dann im Sinne eines geschlossenen Kühlkreislaufes durch den inneren Zuluftkanal 7 hindurch erneut als kühler Zuluftstrom 25 dem Antriebsmotor 5 zugeführt zu werden.

Wie schon erwähnt, sind der innere Zuluftkanal 7 und der äußere Abluftkanal 8 mittels des Einsatzelementes 14 strömungsleitend voneinander getrennt. Darüber hinaus bewirkt das Einsatzelement 14 auch eine thermische Isolierung zwischen dem inneren Zuluftkanal 7 und dem äußeren Abluftkanal 8, sodass der gekühlte Zuluftstrom 25 entlang seines Laufweges im Zuluftkanal 7 möglichst wenig Wärme vom wärmeren Abluftstrom 26 des Abluftkanals 8 aufnimmt. Zur Erzielung einer möglichst guten Wärmeisolierung ist das Einsatzelement 14 bevorzugt aus einem Material mit niedriger Wärmeleitfähigkeit und insbesondere aus Kunststoff gefertigt, und weist zudem eine geeignete Wandstärke auf. Alternativ oder ergänzend kann die Wand des Einsatzelementes 14 mit einem oder mehreren Isolationsvolumen versehen sein. Solche Isolationsvolumen können Hohlräume mit oder ohne Füllung sein, wobei insbesondere eine Luftfüllung einfach zu realisieren ist und dabei eine hohe Isolationswirkung entfaltet.

Abweichend von der gezeigten bevorzugten Ausführungsform kann es auch zweckmäßig sein, den vorderen, ersten Umlenkraum 31 mit einigem Abstand zum Antriebsmotor 5 auszubilden. In einem solchen Falle wäre dann auch hier für eine Trennung zwischen dem aus dem Antriebsmotor 5 austretenden Luftstrom und dem zurückgeführten, wieder in den Antriebsmotor 5 eintretenden Luftstrom zu sorgen, was bevorzugt durch ein Einsatzelement analog zum vorstehend beschriebenen Einsatzelement 14 und der damit erzielten Luft- und Wärmeführung geschieht. In diesem Fall würde dann das Führungsrohr 1 auch auf seiner dem Werkzeugkopf 3 zugewandten Seite des Antriebsmotors 5 einen Kühlwandabschnitt 13 bilden. Auch bei einer solchen Ausbildung wäre das oben schon erwähnte Prinzip der gegenläufigen Umströmung gewahrt.

## Patentansprüche

1. Handgeführtes Schaftarbeitsgerät mit einem Führungsrohr (1), mit einem an einem Abtriebsende (2) des Führungsrohres (1) angebrachten Abtriebskopf (3), und mit einem elektrischen Antriebsmotor (5) für ein über den Abtriebskopf (3) angetriebenes Werkzeug (4), wobei der elektrische Antriebsmotor (5) durch einen Kühlluftstrom (6) gekühlt ist, wobei zur Führung des Kühlluftstromes (6) auf der dem Abtriebskopf (3) abgewandten Seite des Antriebsmotors (5) im Führungsrohr (1) ein Zuluftkanal (7) zum elektrischen Antriebsmotor (5) hin und ein Abluftkanal (8) vom elektrischen Antriebsmotor (5) fort verlaufen, wobei der elektrische Antriebsmotor (5) einen radial inneren Rotor (9) und einen radial äußeren Stator (10) aufweist, wobei zwischen dem Rotor (9) und dem Stator (10) ein Ringspalt (11) ausgebildet ist, und wobei der Zuluftkanal (7) derart in den Ringspalt (11) mündet, dass der Kühlluftstrom (6) durch den Ringspalt (11) geleitet wird, und dass der aus dem Ringspalt (11) austretende Kühlluftstrom (6) entlang einer äußeren Umfangsfläche (12) des Stators (10) zurück in den Abluftkanal (8) geführt wird.

2. Schaftarbeitsgerät nach Anspruch 1,
**dadurch gekennzeichnet, dass** der elektrische Antriebsmotor (5) ein in das Führungsrohr (1) eingesetzter und vom Führungsrohr (1) umschlossener Rohrmotor ist.

3. Schaftarbeitsgerät nach Anspruch 1 oder 2,
**dadurch gekennzeichnet, dass** der Zuluftkanal (7) und der Abluftkanal (8) zusammen mit einem Wärmetauscherabschnitt (33) des elektrischen Antriebsmotors (5) zu einem zumindest teilweise und insbesondere vollständig geschlossenen Kühlluftkreislauf miteinander verbunden sind.

4. Schaftarbeitsgerät nach Anspruch 3,
**dadurch gekennzeichnet, dass** der Kühlkreislauf und insbesondere der Abluftkanal (8) einen Kühlwandabschnitt (13) aufweist, wobei der Kühlwandabschnitt (13) durch das Führungsrohr (1) gebildet ist.

5. Schaftarbeitsgerät nach Anspruch 4,
**dadurch gekennzeichnet, dass** das Führungsrohr (1) zumindest im Bereich des Kühlwandabschnittes (13) aus einem Material mit hoher Wärmeleitfähigkeit, bevorzugt aus Metall und insbesondere aus Aluminium besteht.

6. Schaftarbeitsgerät nach einem der Ansprüche 1 bis 5,
**dadurch gekennzeichnet, dass** der Zuluftkanal (7) und der Abluftkanal (8) konzentrisch zueinander angeordnet und durch ein Einsatzelement (14) im Führungsrohr (1) voneinander getrennt sind.

7. Schaftarbeitsgerät nach einem der Ansprüche 1 bis 6,
**dadurch gekennzeichnet, dass** der elektrische Antriebsmotor (5) im Bereich einer dem Abtriebsende (2) zugewandten Hälfte des Führungsrohres (1) angeordnet ist.

8. Schaftarbeitsgerät nach einem der Ansprüche 1 bis 7,
**dadurch gekennzeichnet, dass** der elektrische Antriebsmotor (5) in einem Abstand (a) zum Abtriebsende (2) des Führungsrohres (1) angeordnet ist.

## Claims

1. Hand-held shaft implement having a guide tube (1), having an output head (3), which is attached to an output end (2) of the guide tube (1), and having an electric drive motor (5) for a tool (4) driven via the output head (3), wherein the electric drive motor (5) is cooled by a cooling-air stream (6), wherein, for guiding the cooling-air stream (6), on that side of the drive motor (5) which is directed away from the output head (3), a supply-air channel (7) runs in the guide tube (1) to the electric drive motor (5) and an exhaust-air channel (8) runs therein away from the electric drive motor (5), wherein the electric drive motor (5) has a radially inner rotor (9) and a radially outer stator (10), wherein an annular gap (11) is formed between the rotor (9) and the stator (10), and wherein the supply-air channel (7) opens into the annular gap (11) in such a way that the cooling-air stream (6) is directed through the annular gap (11) and the cooling-air stream (6) exiting the annular gap (11) is guided back into the exhaust-air channel (8) along an outer circumferential surface (12) of the stator (10).

2. Shaft implement according to claim 1,
**characterized in that** the electric drive motor (5) is a tubular motor which is inserted into the guide tube (1) and which is surrounded by the guide tube (1).

3. Shaft implement according to claim 1 or 2,
**characterized in that** the supply-air channel (7) and the exhaust-air channel (8), together with a heat-exchanger section (33) of the electric drive motor (5), are connected to one another to form an at least partially, in particular completely, closed cooling-air circuit.

4. Shaft implement according to claim 3,
**characterized in that** the cooling-air circuit, in particular the exhaust-air channel (8), has a cooling-wall section (13), wherein the cooling-wall section (13) is formed by the guide tube (1).

5. Shaft implement according to claim 4,
**characterized in that**, at least in the region of the cooling-wall section (13), the guide tube (1) consists of a material with high thermal conductivity, preferably of metal, in particular of aluminium.

6. Shaft implement according to one of claims 1 to 5,
**characterized in that** the supply-air channel (7) and the exhaust-air channel (8) are arranged concentrically with respect to one another and are separated from one another by an insert element (14) in the guide tube (1).

7. Shaft implement according to one of claims 1 to 6,
**characterized in that** the electric drive motor (5) is arranged in the region of a half of the guide tube (1) that is directed towards the output end (2).

8. Shaft implement according to one of claims 1 to 7,
**characterized in that** the electric drive motor (5) is arranged at a distance (a) from the output end (2) of the guide tube (1).

## Revendications

1. Dispositif de travail d'arbre à main comprenant un tube de guidage (1), une tête de sortie (3) fixée à une extrémité de sortie (2) du tube de guidage (1), et un moteur d'entraînement électrique (5) destiné à un outil (4) entraîné par le biais de la tête de sortie (3), le moteur d'entraînement électrique (5) étant refroidi par un flux d'air de refroidissement (6), un conduit d'air d'alimentation (7) s'étendant en direction du moteur d'entraînement électrique (5), et un conduit d'air d'évacuation (8) s'étendant depuis le moteur d'entraînement électrique (5), afin de guider le flux d'air de refroidissement (6), du côté du moteur d'entraînement (5) qui est opposé à la tête de sortie (3), dans le tube de guidage (1), le moteur d'entraînement électrique (5) comportant un rotor radialement intérieur (9) et un stator radialement extérieur (10), un espace annulaire (11) étant ménagé entre le rotor (9) et le stator (10), et le conduit d'air d'alimentation (7) débouchant dans l'espace annulaire (11) de manière à ce que le flux d'air de refroidissement (6) soit guidé à travers l'espace annulaire (11) et que le flux d'air de refroidissement (6) sortant de l'espace annulaire (11) soit ramené dans le conduit d'air d'évacuation (8) le long d'une surface périphérique externe (12) du stator (10).

2. Dispositif de travail d'arbre selon la revendication 1,
**caractérisé en ce que** le moteur d'entraînement électrique (5) est un moteur tubulaire inséré dans le tube de guidage (1) et entouré par le tube de guidage (1).

3. Dispositif de travail d'arbre selon la revendication 1 ou 2,
**caractérisé en ce que** le conduit d'air d'alimentation (7) et le conduit d'air d'évacuation (8) sont reliés l'un à l'autre avec une portion d'échange thermique (33) du moteur d'entraînement électrique (5) afin de former au moins partiellement et en particulier complètement un circuit fermé d'air de refroidissement.

4. Dispositif de travail d'arbre selon la revendication 3,
**caractérisé en ce que** le circuit de refroidissement et en particulier le conduit d'air d'évacuation (8) comporte une portion de paroi de refroidissement (13), la portion de paroi de refroidissement (13) étant formée par le tube de guidage (1).

5. Dispositif de travail d'arbre selon la revendication 4,
**caractérisé en ce que** le tube de guidage (1), au moins dans la zone de la portion de paroi de refroidissement (13), est en une matière à haute conductivité thermique, de préférence en métal et en particulier en aluminium.

6. Dispositif de travail d'arbre selon l'une des revendications 1 à 5,
**caractérisé en ce que** le conduit d'air d'alimentation (7) et le conduit d'air d'évacuation (8) sont disposés concentriquement l'un à l'autre et sont séparés l'un de l'autre par un élément d'insertion (14) dans le tube de guidage (1).

7. Dispositif de travail d'arbre selon l'une des revendications 1 à 6,
**caractérisé en ce que** le moteur d'entraînement électrique (5) est disposé dans la zone d'une moitié du tube de guidage (1) qui est dirigée vers l'extrémité de sortie (2).

8. Dispositif de travail d'arbre selon l'une des revendications 1 à 7,
**caractérisé en ce que** le moteur d'entraînement électrique (5) est disposé à une distance (a) de l'extrémité de sortie (2) du tube de guidage (1).
